# FASCICULE DE BREVET EUROPEEN

(11) **EP 0 835 387 B1**
(45) Date de publication et mention de la délivrance du brevet: **20.10.1999**
(21) Numéro de dépôt: 95907696.9
(22) Date de dépôt: 25.01.1995
(51) Int. Cl.: F16B 5/00, E04B 1/61

(54) **DISPOSITIF D'ASSEMBLAGE POUR MAINTENIR ENSEMBLE DES PANNEAUX PAR LEURS ARETES**
BEFESTIGUNGSVORRICHTUNG ZUM VERBINDEN DER RANDSTEGE VON PLATTEN
ASSEMBLY DEVICE FOR INTERCONNECTING THE EDGES OF PANELS

(30) Priorité: 26.01.1994 CA 2114280
(43) Date de publication de la demande: 15.04.1998
(73) Titulaire: Hugues-Clery, Felix, 83500 La Seyne-sur-Mer (FR)
(72) Inventeur: LANGLOIS, Richard, Saint-Jerôme, Québec J7Z 2AI (CA); DUPONT, Luc, Saint-Jerôme, Québec J7Z 2AI (CA)
(74) Mandataire: Roman, Michel
(86) Numéro de dépôt international: FR9500079
(87) Numéro de publication internationale: WO9520725

(56) Documents cités:
- DE-A- 1 459 718
- DE-U- 8 519 383
- US-A- 3 487 756

## Description

La présente invention a pour objet un dispositif permettant d'assurer de façon simple, sûre et solide la jointure entre différents panneaux.

Par "panneaux" on entend tous les éléments de structure ou de revêtement présentant des arêtes qui peuvent être jointes selon l'invention, et ce quelqu'en soit l'usage.

Ces "panneaux" peuvent, notamment et non restrictivement, être des pans de murs, de panneaux de recouvrement, des cloisons amovibles destinés, par exemple, à délimiter un espace de travail, ou encore des panneaux, diverses pièces de rangement comme par exemple, les côtés de boîtes-classeur, boîtes à courrier, fichier, caissons, présentoirs, armoires à papeteries, vestiaires de bureau etc....

Par "panneaux", on entend également des éléments de structures de bâtiment tels que des parquets, des plinthes, différents revêtements de sols ou de murs, et plus particulièrement des revêtements isolants. Dans ce dernier cas, les panneaux pourront évidemment être en tout type de matériau isolant convenable. A titre d'exemple de tel matériau, on peut citer le liège aggloméré avec de la résine sous pression.

Le principe consistant à munir les arêtes de panneaux à assembler d'un jeu de tenons et de mortaises qui se correspondent et qui peuvent venir s'emboîter les uns dans les autres, est un principe de base de la construction.

Pour éviter tout jeu, ou tout glissement, dans le sens où les éléments ont été imbriqués, ce qui aboutirait une séparation non voulue des panneaux, il est également connu de bloquer ceux-ci une fois imbriqués en utilisant une clef. Cette clef est insérée transversalement dans le joint par rapport à la direction d'assemblage des éléments de manière à empêcher tout jeu entre ceux-ci. De tels dispositifs sont divulgués notamment dans le brevet canadien n° 114 673 de 1908 et le brevet américain n° 4 462 196 de 1984.

Ce dernier document décrit un joint qui comprend un système de tenons/mortaises disposés symétriquement sur chaque arête des panneaux à joindre. Une fois les tenons/mortaises emboîtés les uns dans les autres, une cavité se trouve ménagée au centre pour permettre l'insertion d'une clef. Ce système de tenons/mortaises est efficace mais la structure, la position et la forme des tenons et mortaises procurent un joint qui est très instable dans la direction de l'assemblage. Pour remédier à ce problème, un élément supplémentaire est nécessaire pour maintenir les tenons et mortaises en position de manière à permettre une insertion aisée de la clef. De plus la surface de contact entre les divers éléments du joint est relativement réduite ce qui le rend fragile.

Le certificat d'utilité allemand N° DE-U-85 19 383 décrit un profilé métallique composite formé d'au moins deux profilés simples assemblés par leurs longs côtés au moyen d'éléments d'accrochage longitudinaux en forme de "C" de l'un des profilés simples s'engageant dans des éléments d'accrochage identiques du second profilé, lesdits profilés simples comportent chacun, sur la face latérale par laquelle ils sont en contact, au moins un segment longitudinal concave, ces segments étant situés face à face et constituant ensemble un logement de section circulaire ou ovale recevant un tube interne dilatable apte à les écarter l'une de l'autre pour solidariser les deux profilés.

Le verrouillage de l'assemblage s'opère en dilatant le tube interne au moyen d'un mandrin enfilé à force, ce qui nécessite un outillage spécial ne permettant la réalisation dudit assemblage qu'en usine et rendant le système totalement inutilisable pour le montage de panneaux sur un chantier, par exemple.

On peut également citer ici le brevet canadien n° 968 122 de 1975, qui décrit un système de tenons/mortaises où l'assemblage s'effectue en deux mouvements successifs des éléments l'un par rapport à l'autre. Ce dispositif est aussi muni d'une clef.

Lorsque l'on assemble divers éléments, comme par exemple des panneaux, bord à bord, on peut souhaiter qu'ils forment un certain angle l'un par rapport à l'autre. Le brevet canadien n° 114 673 déjà cité, suggère à cet effet d'utiliser deux éléments de structure différente, mais s'imbriquant l'un dans l'autre à 90°, pour former entre eux un angle droit. Le brevet américain n° 3 160 249 de 1960 utilise quant à lui des éléments à assembler identiques mais qui ne s'imbriquent pas l'un avec l'autre. Chacun de ces éléments s'imbrique sur une partie d'une même clef, et les éléments et la clef ont des formes spécifiques suivant l'angle désiré.

La présente invention a pour objet un dispositif d'assemblage pour maintenir ensemble des panneaux par leurs arêtes. Chaque panneau a un axe longitudinal, deux surfaces opposées, et au moins une arête munie d'un jeu de tenons et de mortaises façonnés pour s'imbriquer d'un seul mouvement avec un jeu correspondant de tenons et de mortaises façonnés et disposés sur une arête adjacente d'un autre panneau.

Ces panneaux une fois imbriqués peuvent être bloqués à l'aide d'une clef insérable dans une cavité qui s'étend centralement entre leurs arêtes adjacentes.

Ce dispositif d'assemblage selon l'invention est caractérisé par la revendication 1.

Ce dispositif d'assemblage selon l'invention possède de nombreux avantages.

Tout d'abord, celui-ci a l'avantage d'être simple et rapide à mettre en place, les tenons et mortaises étant avantageusement disposés de manière à pouvoir être assemblés d'un seul mouvement, suivant une seule direction.

En outre, un autre avantage du dispositif selon l'invention est de fournir un joint d'une grande solidité. En effet, une fois la clef insérée, aucun espace libre n'est présent à l'intérieur du joint et la surface de contact entre les pièces est maximum. Cette grande compacité du joint induit une grande résistance aux chocs, aux tiraillements et aux pressions de toutes sortes auxquels il pourrait être soumis.

Selon une première variante préférée de l'invention, le côté du second tenon opposé au côté le plus proche de l'axe longitudinal, est tangent à l'autre surface du panneau. Cette disposition particulière a l'avantage de présenter un joint ayant une surface lisse et sans aspérités.

Suivant une deuxième variante préférée de l'invention, la rainure a ses côtés qui sont égaux à L2, et sont séparés l'un de l'autre par une distance égale à L1. Le second côté du premier tenon a une longueur égale à L2. La seconde mortaise a ses côtés opposés égaux à L2 et le second tenon a son côté opposé à celui définissant en partie la seconde mortaise qui est égale à L1, et son côté opposé à celui le plus proche de l'axe longitudinal, qui est positionné à une distance L2 de l'autre surface du panneau. Ce côté opposé du second tenon détermine une encoignure ouverte sur ladite autre surface du panneau. La distance D1 est égale de ce fait à L1 et la distance D2 est alors égale à la somme des distances L1 et L2

Ce dispositif particulier permet non seulement une imbrication des panneaux en ligne par un seul mouvement dans le sens vertical par rapport à l'axe longitudinal des panneaux, mais aussi une imbrication de ces mêmes panneaux dans des directions transversales par un seul mouvement. Selon ce mouvement le premier tenon de l'arête du panneau s'engage dans la rainure centrale de l'arête adjacente de l'autre panneau, tandis que la seconde mortaise de l'arête du panneau reçoit le second tenon de l'arête adjacente de l'autre panneau. Une fois cette imbrication réalisée, on insère la clef.

Ainsi, cette deuxième variante préférée de l'invention a le grand avantage de permettre non seulement la jointure de panneaux en ligne, mais aussi suivant un certain angle. Cela sans modification de la structure du jeu de tenons et mortaises, ou de la clef.

Suivant une troisième variante préférée de l'invention les premiers et seconds tenons peuvent avoir une forme rectangulaire, ceci permettant, dans le cas de panneaux pouvant être assemblés suivant un angle non nul, d'obtenir un angle droit. Dans ce dernier cas, il peut être avantageux que la distance L1 soit équivalente à deux fois la distance L2, cela implique que la section de la cavité est un losange. Cela implique également, que dans le cas où les tenons ont une forme rectangulaire, la cavité a une section carrée, ce qui constitue une quatrième variante préférée selon l'invention.

Pour munir les panneaux du jeu de tenons et mortaises selon l'invention il est possible que celui-ci soit intégré à l'arête du panneau. Mais il est également possible que ce jeu de tenons et de mortaises soit intégré à un élément distinct du panneau. Cet élément étant destiné à venir se fixer sur les arêtes correspondantes de ce panneau.

Les dessins joints à la divulgation montrent plusieurs modes de réalisation préférés de l'invention.

La figure 1 est une vue en perspective de deux panneaux joints en ligne suivant un premier mode de réalisation préféré l'invention, ou un jeu de tenons et de mortaises selon l'invention est présent sur des éléments qui sont distincts des panneaux, mais fixés aux arêtes de ceux-ci.

Les figures 2a et 2b sont des vues en coupe horizontale des extrémités d'un panneau sont les arêtes sont intégralement formées d'un jeu de tenons et mortaises selon un deuxième mode de réalisation préféré de l'invention.

La figure 3 est une vue en coupe horizontale des extrémités de deux panneaux tels qu'illustrés sur la figure 2, ayant leurs jeux respectifs de tenons et de mortaises en regard l'un de l'autre.

La figure 4 est une vue en coupe horizontale similaire à celle de la figure 3, montrant les panneaux une fois assemblés et la clef insérée.

Les figures 5a et 5b sont des vues en coupe horizontale des extrémités d'un panneau sont les arêtes sont intégralement formées d'un jeu de tenons et mortaises selon un troisième mode de réalisation préféré de l'invention.

La figure 6 est une vue en coupe horizontale des extrémités de deux panneaux tels qu'illustrés sur la figure 5, ayant leurs jeux respectifs de tenons et de mortaises en regard l'un de l'autre de manière à réaliser un assemblage des panneaux en ligne.

La figure 7 est une vue en coupe horizontale similaire à celle de la figure 5, montrant les panneaux une fois assemblés en ligne et la clef insérée.

La figure 8 apparaissant sur la même planche de dessins que la figure 5a est une vue en coupe horizontale des extrémités de deux panneaux tels qu'illustrés sur la figure 5, dont les jeux respectifs de tenons et de mortaises sont présentés en regard l'un de l'autre de manière à réaliser un assemblage des panneaux à angle droit.

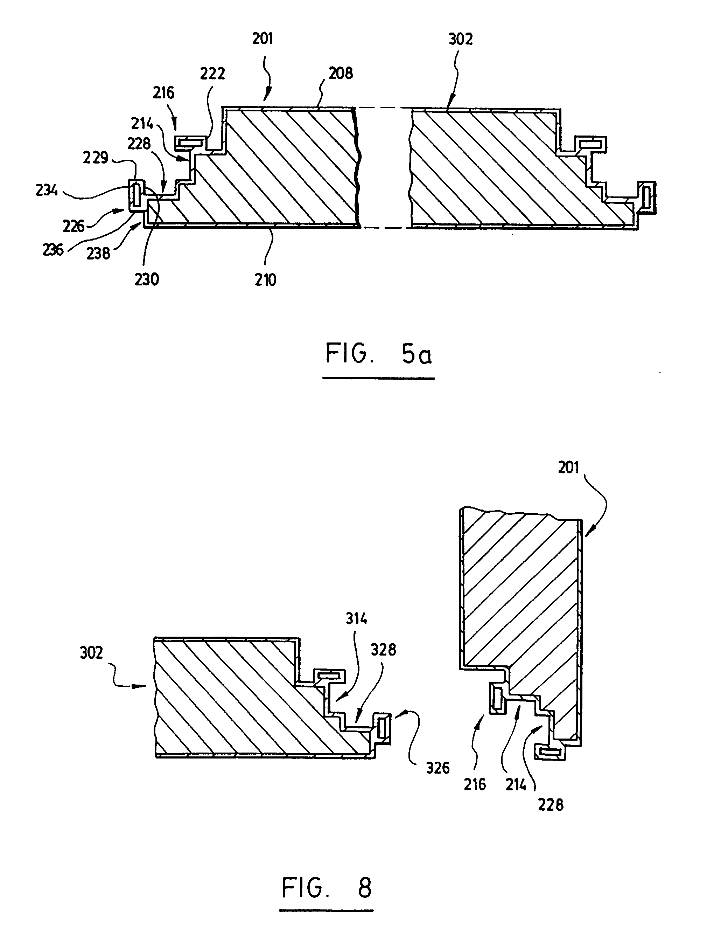

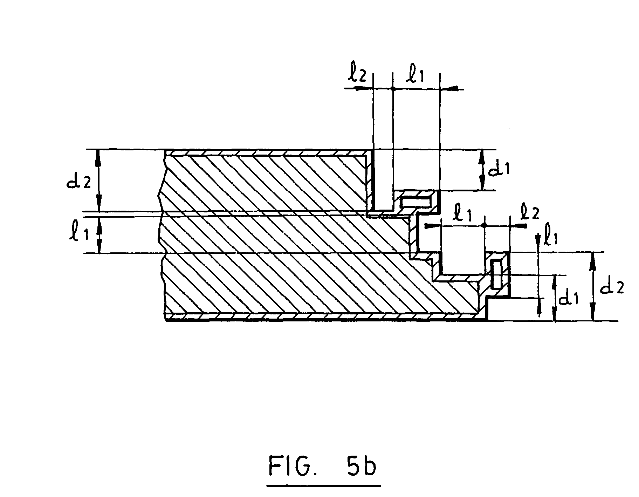

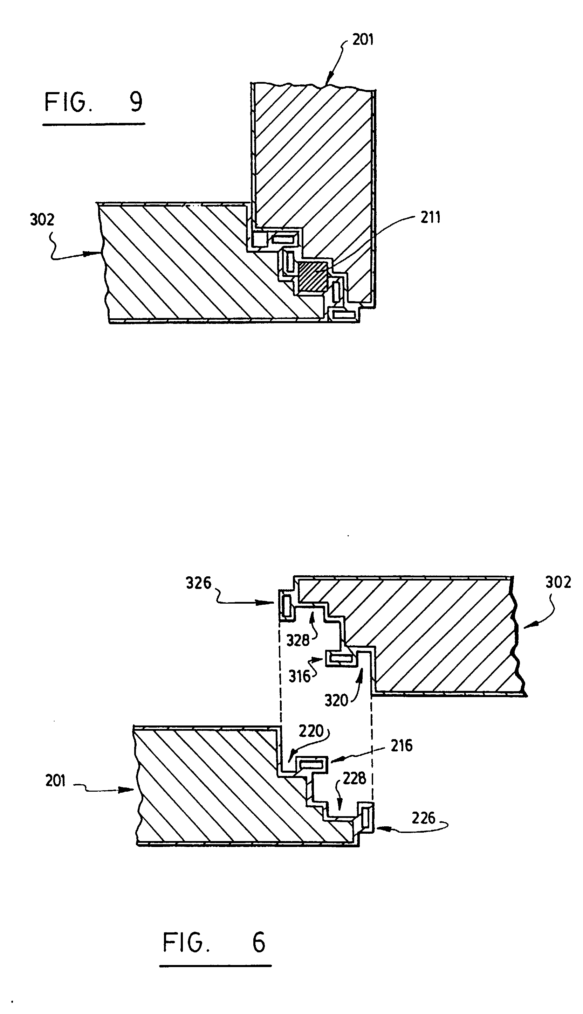

Enfin, la figure 9 apparaissant sur la même planche de dessin que la figure 6, est une vue en coupe horizontale de deux panneaux tels qu'illustrés sur la figure 5, une fois assemblés à angle droit et la clef insérée.

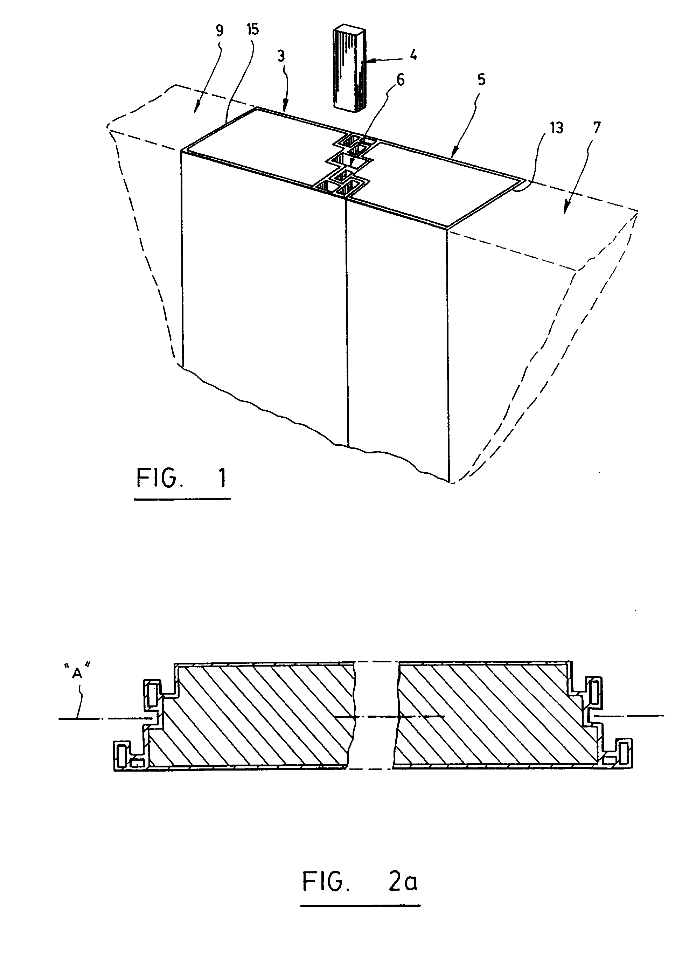

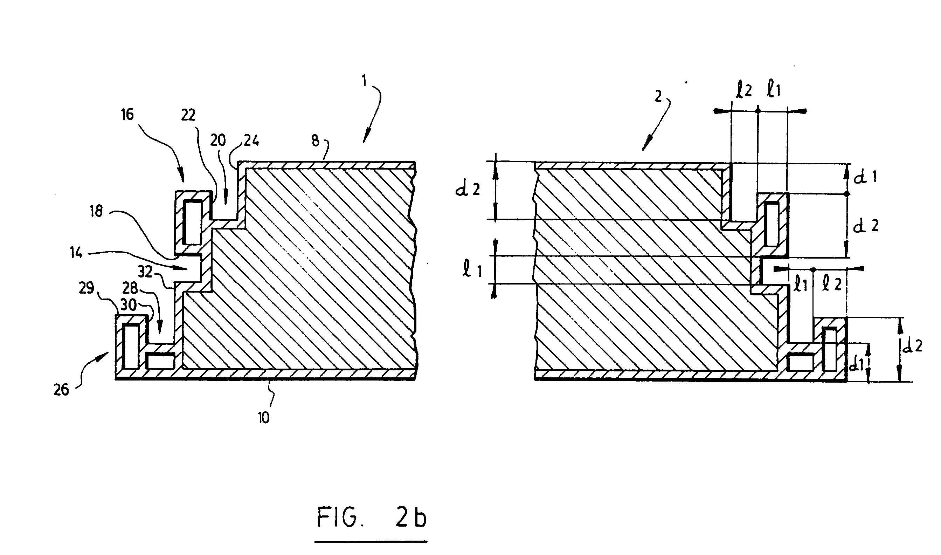

La figure 1 représente deux panneaux 9 et 7 joints selon un premier mode de réalisation préféré du dispositif d'assemblage selon l'invention. Il comprend un élément 3 imbriqué à un deuxième élément 5 et une clef 4 positionnée pour être insérée dans une cavité 6 laissée entre les deux éléments une fois ceux-ci imbriqués. Les éléments 3 et 5 sont pourvus d'un jeu de tenons de mortaises dont la structure est identique à celle qui sera décrite ci-après en se référant à la figure 2. Les éléments 3 et 5 sont distincts des panneaux 9 et 7 et sont fixés aux arêtes 15 et 13 de ceux-ci par tout moyen approprié (colle, vis...).

La figure 2 représente une vue en coupe de panneaux munis de jeux de tenons et de mortaises selon un second mode de réalisation de l'invention où les jeux de tenons sont intégrés au panneau.

Sur cette figure chaque panneau 1 ou 2 a un axe longitudinal "A", deux surfaces opposées 8 et 10, et au moins une arête 12 munie d'un jeu de tenons et de mortaises. Chaque arête 12 munie de tenons et de mortaises comprend une rainure centrale 14 orientée dans l'axe "A" du panneau. Cette rainure a deux côtés opposés et définit avec la rainure 12 de l'arête adjacente, une cavité qui correspond à celle numérotée 6 sur le mode de réalisation de la figure 1.

Chaque jeu de tenons et de mortaises inclut un premier tenon rectangulaire 16, qui a une longueur L1 dans le sens de l'axe "A" du panneau. Ce premier tenon 16 est positionné du côté d'une des surfaces du panneau 8 par rapport à l'axe "A". Ce premier tenon 16 se dirige vers ladite surface mais s'arrête à une distance D1 de celle-ci. Ce tenon 16 a un premier côté 18, qui au moins en partie, définit un des côtés opposés de la rainure centrale 14.

Chaque jeu de tenons et de mortaises inclut également une première mortaise 20, qui a des côtés opposés, espacés d'une distance de longueur L2. Cette première mortaise 20 est orientée vers l'extérieur et ouvre sur la même surface du panneau 8 que le premier tenon 16. Cette mortaise 20 a un de ses côtés opposés qui est défini, au moins en partie, par un second côté 22 du tenon 16, ce second côté 22 du tenon 16 étant adjacent au côté 18 du tenon 16. La mortaise 20 a l'autre de ses côtés opposés d'une profondeur D2, qui est défini par une portion 24 de l'arête 12 du panneau et qui rejoint la surface 8 du panneau.

Chaque jeu de tenons et de mortaises comprend également un second tenon rectangulaire 26 qui a des côtés et une longueur égale à L2 par rapport à l'axe "A" du panneau. Ce second tenon 26 est positionné du côté de l'autre surface 10 du panneau par rapport à l'axe "A". Ce second tenon 26 se dirige vers l'axe "A" du panneau. Le côté 29 du second tenon 26 qui se trouve le plus proche de l'axe "A"' est positionné à une distance D2 de la surface 10 du panneau. Le côté du tenon 26, opposé au côté 29 le plus proche de l'axe "A", est tangent à l'autre surface 10 du panneau.

Enfin, chaque jeu de tenons et mortaises du dispositif d'assemblage selon l'invention comprend une seconde mortaise 28 qui a des côtés opposés espacés d'une distance égale à L1. Cette seconde mortaise 28 est ouverte vers l'intérieur et orientée vers l'axe "A" du panneau. Cette mortaise 28 est tangente à la rainure 14 et a un fond disposé à une distance D1 de l'autre surface 10 du panneau. Cette mortaise 28 a aussi un de ses côtés opposés défini au moins en partie par un côté 30 du second tenon 26. Ce côté 30 du tenon 26 est adjacent au côté 29 le plus proche de l'axe "A". La seconde mortaise 28 a, en outre, l'autre de ses côtés opposés défini par une autre portion 32 de l'arête 12 du panneau.

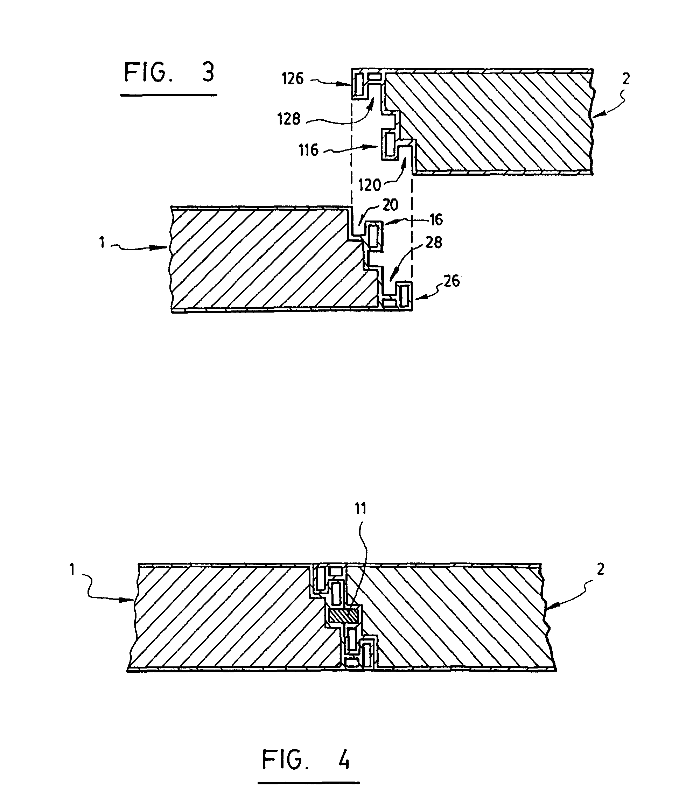

La figure 3 présente les deux panneaux 1 et 2 précédemment décrit, prêts à être assemblés. A cet effet, les panneaux sont positionnés l'un par rapport à l'autre de façon à permettre un assemblage de ceux-ci en un seul mouvement.

A ce sujet, on appréciera que les tenons et mortaises sont façonnés de manière à permettre au premier tenon 16 de l'arête 12 du panneau 1 de s'insérer d'un seul mouvement dans la seconde mortaise 128 de l'arête adjacente 112 de l'autre panneau 2. De même le deuxième tenon 26 de l'arête 12 du même panneau 1 vient s'insérer d'un même mouvement dans la première mortaise 120 de l'arête adjacente 112 de l'autre panneau 2.

Une fois l'assemblage des panneaux réalisés, comme présenté dans la figure 4, la clef 4 est insérée dans la cavité centrale de manière à bloquer le dispositif.

Un troisième mode de réalisation préférée de l'invention est représentée dans les figures 5 à 9.

Dans celui-ci les panneaux sont munis d'un dispositif comportant certaines caractéristiques structurelles semblables au deuxième mode de réalisation. Aussi, pour plus de simplicité les éléments illustrés sur les figures 5 à 9 ont été numérotés de manière à ce que les éléments similaires à ceux précédemment décrits soient identifiés par des numéros qui ne diffèrent que par le chiffre des centaines.

Ce troisième mode de réalisation possède une structure qui se distingue du deuxième mode de réalisation par le fait que la rainure 214 a ses côtés qui sont égaux à L2 et sont séparés l'un de l'autre par une distance égale à L1. Le premier tenon 216 a une forme rectangulaire, son second côté 222 a une longueur égale à L2, ainsi que les côtés opposés de la seconde mortaise 228 qui sont aussi égaux à L2. De plus, le second tenon 226 a son côté 234, opposé à celui 230 définissant en partie la seconde mortaise 228, égal à L1. Ce tenon 226 a, en outre, son côté 236 opposé à celui 229 le plus proche de l'axe "A", qui est positionné à une distance L2 de l'autre surface 210 du panneau. Ce côté 236 opposé du second tenon 226 détermine une encoignure 238 ouverte sur l'autre surface 210 du panneau. Enfin, la distance L1 est équivalente à deux fois la distance L2, ce qui implique que la section de la cavité est un carré.

Cette forme et cette disposition particulière du jeu de tenons et mortaise a pour conséquence que la distance D1 est alors égale à L1, et que la distance D2 est alors égale à la somme des distances L1 et L2.

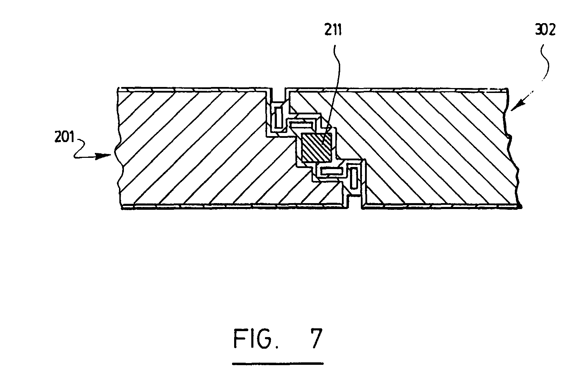

Selon ce troisième mode de réalisation préférée de l'invention, il est possible de joindre les panneaux en ligne (voir figure 6 et 7). On procède alors de la même manière que pour les panneaux selon le premier mode de réalisation préférée de l'invention. Ce troisième mode de réalisation préférée permet également une imbrication perpendiculaire des panneaux. Ainsi, la figure 8 représente les deux panneaux de la figure 5 disposés perpendiculairement l'un par rapport à l'autre de manière à être assemblés d'un seul mouvement. Pour procéder à cette imbrication le premier tenon 216 de l'arête du panneau 201 doit s'engager dans la rainure centrale 314 de l'arête adjacente de l'autre panneau 302, tandis que la seconde mortaise 228 de l'arête du panneau 201 reçoit le second tenon 326 de l'arête adjacente de l'autre panneau 302.

La figure 9 représente les panneaux de la figure 8 une fois assemblés perpendiculairement, la clef 204 est insérée dans la cavité formée par la réunion de la rainure centrale 214 du panneau 201 et de la seconde mortaise 328 de l'autre panneau 302.

Il est évidemment possible que les jeux de tenons et mortaises selon l'invention ne fassent pas partie intégrante des panneaux mais soient présents sur des éléments distincts des panneaux à assembler, comme représenté dans la figure 1. Tel que précédemment indiqué, dans ce mode de réalisation préférentiel de l'invention, le jeu de tenons et de mortaises présent sur les éléments est analogue à celui décrit dans le deuxième mode de réalisation préféré de l'invention. Les éléments distincts 3 et 4 sont fixés sur les arêtes des panneaux 9 et 7. Ces éléments 5 et 3 sont munis d'un jeu de tenons et mortaises selon la première variante préférée de l'invention telle que représentée dans les figures 2, 3 et 4.

La clef, les panneaux, ou les éléments distincts, munis des jeux de tenons et de mortaises selon l'invention, peuvent évidemment être fabriqués en tout matériaux de constructions convenables et notamment en plastiques, en bois, en métal et en divers matériaux composites etc.... Ils peuvent être obtenus par pultrusion, extrusion, moulage, découpage ou tout autres moyens usuellement connus de l'homme du métier.

Les réalisations de l'invention, au sujet desquelles un droit exclusif de propriété ou de privilège est revendiqué, sont définies comme il suit :

## Revendications

1. Un dispositif d'assemblage pour maintenir ensemble des panneaux par leurs arêtes, chaque panneau (1, 7) ayant un axe longitudinal (A) perpendiculaire à la liaison entre les deux panneaux, deux surfaces opposées (8, 10), et au moins une arête munie d'un jeu de tenons (16, 26) et de mortaises (20, 28) façonnés pour s'imbriquer d'un seul mouvement avec un jeu correspondant de tenons et de mortaises façonnés et disposés sur une arête adjacente d'un autre panneau (2, 9), lesdits panneaux une fois imbriqués pouvant être bloqués à l'aide d'une clef (4, 11) insérable dans une cavité (6) s'étendant centralement entre lesdites arêtes adjacentes et formée de rainures centrales (14) ayant deux côtés opposés et orientés dans l'axe longitudinal (A) de chaque panneau, ladite cavité ayant une section d'une surface sensiblement égale à deux fois la surface de la rainure d'un panneau, chaque jeu de tenons et de mortaises incluant :
- un premier tenon (16) parallélépipèdique, ayant une longueur L1 dans le sens de l'axe longitudinal (A) du panneau, positionné du côté d'une des surfaces (8) du panneau par rapport audit axe longitudinal et se dirigeant vers ladite surface mais s'arrêtant à une distance D1 de celle-ci,
- une première mortaise (20) orientée vers l'extérieur, ouvrant sur la même surface du panneau que le premier tenon (16) et ayant des côtés opposés espacés d'une distance de longueur L2, dont l'un est défini au moins en partie par un côté (22) du premier tenon, l'autre côté opposé, de profondeur D2, étant défini par une portion (24) de l'arête du panneau et rejoignant la surface (8) dudit panneau,
- un second tenon (26) parallélépipèdique ayant des côtés et une longueur égale à L2 par rapport à l'axe longitudinal (A) du panneau, ce second tenon étant positionné du côté de l'autre surface (10) du panneau par rapport audit axe longitudinal et se dirigeant vers l'axe longitudinal du panneau, le côté (29) dudit second tenon se trouvant le plus proche dudit axe longitudinal étant positionné à une distance D2 de ladite autre surface (10) du panneau,
- une seconde mortaise (28), ayant des côtés opposés espacés d'une distance égale à L1 et étant ouverte vers l'intérieur et orientée vers l'axe longitudinal (A) du panneau, cette seconde mortaise ayant un fond disposé à une distance D1 de l'autre surface (10) du panneau et ayant aussi un de ses côtés opposés défini au moins en partie par un côté (30) du second tenon (26), ce côté du second tenon étant adjacent au côté de ce second tenon le plus proche de l'axe longitudinal,
ledit dispositif d'assemblage étant caractérisé en ce que les côtés opposés de la rainure centrale (14) sont séparés l'un de l'autre par une distance égale à L1 correspondant à la longueur du premier tenon (16) ou à la distance des côtés opposés de la seconde mortaise (28) de manière à permettre une imbrication des panneaux par un seul mouvement dans le sens vertical par rapport à l'axe longitudinal (A) des panneaux, l'un desdits côtés opposés de la rainure centrale étant, au moins en partie, défini par un côté (18) du premier tenon (16).

2. Dispositif d'assemblage selon la revendication 1 caractérisé en ce que le côté du second tenon (26), opposé au côté (29) le plus proche de l'axe longitudinal (A), est tangent à l'autre surface (10) du panneau.

3. Dispositif d'assemblage selon la revendication 1 caractérisé en ce que la rainure centrale (14) a ses côtés opposés égaux à L2, le second côté (22/222) du premier tenon (16/216) ayant une longueur égale à L2, la seconde mortaise (28/228) ayant ses côtés opposés égaux à L2, et le second tenon (16/226) ayant son côté (34/234) opposé à celui définissant en partie la seconde mortaise qui est égal à L1 et son côté opposé à celui le plus proche de l'axe longitudinal, qui est positionné à une distance L2 de l'autre surface (10/210) du panneau, ce dit côté opposé du second tenon déterminant une encoignure (38/238) ouverte sur ladite autre surface (10/210) du panneau, la distance D1 étant égale à la somme des distances L1 et L2, ce dispositif particulier permettant non seulement une imbrication des panneaux en ligne par un seul mouvement dans le sens vertical par rapport à l'axe longitudinal (A) des panneaux (1/201, 2/302), mais aussi une imbrication de ces mêmes panneaux dans des directions transversales par un seul mouvement selon lequel le premier tenon (16/216) de l'arête du panneau (1/201) s'engage dans la rainure centrale (14/314) de l'arête adjacente de l'autre panneau (2/302), tandis que la seconde mortaise (28/228) de l'arête du panneau reçoit le second tenon (26/326) de l'arête adjacente de l'autre panneau, avant insertion de la clef (11/211).

4. Dispositif d'assemblage selon la revendication 3 caractérisé en ce que la distance L1 est équivalente à deux fois la distance L2, ce qui implique que la section de la cavité (6) est un losange.

5. Dispositif d'assemblage selon les revendications 1, 2, 3 ou 4 caractérisé en ce que la forme parallélépipèdique du premier (16) et du second tenon (26) est rectangulaire.

6. Dispositif d'assemblage selon les revendications 1, 2, 3, 4 ou 5 caractérisé en ce que le jeu de tenons (16, 26) et mortaises (20, 28) est intégré à l'arête correspondante du panneau.

7. Dispositif d'assemblage selon les revendications 1, 2, 3, 4 ou 5 caractérisé en ce que le jeu de tenons (16, 26) et mortaises (20, 28) est intégré à un élément (3, 5) distinct du panneau, ledit élément étant destiné à venir se fixer sur les arêtes correspondantes dudit panneau.

## Patentansprüche

1. Fügevorrichtung zum Zusammenhalten von Platten an ihren Kanten. wobei jede Platte (1, 7) eine Längsachse (A) senkrecht zur Verbindung der beiden Platten. zwei gegenseitige Flächen (8, 10) und mindestens eine Kante aufweist, die mit einem Satz von Federn (16, 26) und Nuten (20, 28) versehen ist, welche so ausgestaltet sind, daß sie in einer einzigen Bewegung in einen Satz von entsprechenden, an einer angrenzenden Platte (2, 9) ausgestalteten und angebrachten Federn und Nuten greifen. und wobei die einmal aneinander gefügten Platten mit Hilfe einer in einen sich mittig zwischen der besagten benachbarten Kanten erstreckenden und von Mittelrillen (14) mit gegenüberliegenden Seiten in der Längsachse (A) jeder Platte gebildeten Hohlraum (6) einführbare Keilleiste (4, 11) blockiert werden können jeder Satz von Federn und Nuten jeweils bestehend aus:
- einer ersten parallelflächigen Feder (16) mit einer Länge L1 in Richtung der Längsachse (A) der Platte, die an der Seite einer der Flächen (8) der Platte in Bezug auf die besagte Längsachse angeordnet und zu der besagten Seite mit einem Rückstand D1 ausgerichtet ist,
- einer ersten nach außen gerichteten Nut (20), die sich nach der gleichen Fläche wie die erste Feder (16) öffnet und gegenüberliegende Seiten einer Länge D2 aufweist, von denen eine Seite mindestens teilweise durch eine Seite (22) der ersten Feder gebilde wird und die gegenüberliegende Seite, einer Tiefe D2, durch einen Teil (24) der Plattenkante gebildet wird und bis an die Fläche (8) der besagten Platte reicht,
- einer zweiten parallelflächigen Feder (26) mit Seiten und einer Länge gleich L2 in Bezug auf die Längsachse (A) der Platte, wobei diese zweite Feder auf der Seite der anderen Fläche (10) der Platte in Bezug auf die besagte Längsachse angeordnet und zu dieser Längsachse der Platte ausgerichtet ist und die Seite (29) der besagten zweiten Feder, die sich der Längsachse am nächsten befindet. in einem Abstand D2 von der besagten anderen Fläche (10) angeordnet ist,
- einer zweiten Nut (28), deren gegenüberliegende Seiten einen Abstand L1 aufweisen, und die sich nach innen zur Langsachse (A) der Platte öffnet, wobei die Rückwand dieser zweiten Feder in einem Abstand D1 von der anderen Seite (10) der Platte angeordnet ist, und deren eine der gegenüberliegenden Seiten mindestens teilweise ebenfalls durch eine Seite (30) der zweiten Feder (26) gebildet wird, welche Seite der zweiten Feder an die der Längsachse am nächsten liegende Seite angrenzt,
wobei die besagte Fügevorrichtung dadurch gekennzeichnet ist, daß die gegenüberliegenden Seiten der Mittelrille (14) mit einem Abstand L1 auseinander liegen, welcher der Länge der ersten Feder (16) bzw dem Abstand der gegenüberliegenden Seiten der zweiten Nut (28) entspricht, wodurch das Aneinanderfügen von Platten in einen einzigen Bewegung in vertikaler Richtung in Bezug auf die Längsachse (A) der Platten ermöglicht wird, und daß eine der besagten gegenüberliegenden Seiten der Mittelrille mindestens teilweise durch eine Seite (18) der ersten Feder (16) gebildet wird.

2. Fügevorrichtung gemäß Anspruch 1. dadurch gekennzeichnet. daß die Seite der zweiten Feder (26), entgegengesetzt der der Längsachse (A) am nächsten liegendein Seite (29), an die andere Fläche (10) der Platte ansteht.

3. Fügevorrichtung gemäß Anspruch 1. dadurch gekennzeichnet, daß die Mittelrille (14) gegenüberliegende Seiten mit dem Maß L2 hat, die zweite Seite (22/222) der ersten Feder (16/216) eine Länge entsprechend L2 hat, die zweite Nut (28/228) gegenüberliegenden Seiten mit dem Maß L2 hat, und die zweite Feder (16/226) ihre Seite (34/234) gegenüber der Seite, welche teilweise die zweite Nut bildet. die das Maß L1 hat, und ihre Seite gegenüber der, die der Längsachse am nächsten liegt, hat, welche in einem Abstand L2 von der anderen Fläche (10/210) der Platte angeordnet ist, diese besagte gegenüberliegende Seite der zweiten Feder einen auf die hesagte andere Fläche (10/210) öffnenden Winkel (38/238) bestimmt, der Abstand D1 der Summe der Abstände L1 und L2 entspricht, wobei diese besondere Anordnung nicht nur einen Verbund der angereihten Platten durch eine einzige Bewegung in vertikaler Richtung in Bezug auf die Längsachse (A) der Platten (1/201, 2/302) ermöglicht, sondern auch einen Verbund der selben Platten in Querrichtungen durch eine einzige Bewegung bei der die erste Feder (16/216) der Kante der Platte (1/201) in die Mittelrille (14/314) der anstoßenden Kante der anderen Platte (2/302) eingreift während die zweite Nut (28/228) der Plattenkante die zweite Feder (26/326) der anstoßenden Kante der anderen Platte vor dem Einführen der Keilleiste (11/211) aufnimmt.

4. Fügevorrichtung gemäß Anspruch 3, dadurch gekennzeichnet, daß der Abstand L1 zweimal dem Abstand L2 entspricht, was bedingt, daß der Querschnitt des Hohlraums (6) ein Rhombus ist.

5. Fügevorrichtung gemäß den Ansprüchen 1, 2, 3 oder 4, dadurch gekennzeichnet, daß die parallelflächige Form der ersten (16) und der zweiten Feder (26) rechteckig ist.

6. Fügevorrichtung gemäß den Ansprüchen 1, 2, 3, 4 oder 5, dadurch gekennzeichnet, daß der Satz von Federn (16, 26) und Nuten (20, 28) in die entsprechende Kante der Platte integriert ist.

7. Fügevorrichtung gemäß den Ansprüchen 1, 2, 3, 4 oder 5, dadurch gekennzeichnet, daß der Satz von Federn (16, 26) und Nuten (20, 28) in ein von der Platte verschiedenes Element (3, 5) integriert ist, wobei das besagte Element dazu bestimmt ist, auf den entsprechenden Kanten der besagten Platte befestigt zu werden.

## Claims

1. An assembly device for holding together panels by their edges, each panel (1, 7) having a longitudinal axis (A) perpendicular to the connection between the two panels, two opposite surfaces (8, 10), and at least one edge equipped with a set of tenons (16, 26) and mortices (20, 28) shaped to interlock in a single movement with a corresponding set of tenons and mortices shaped and arranged on an adjoining edge of another panel (2, 9), the said panels, once interlocked, capable of being blocked using a key (4,11) which can be inserted in a cavity (6) extending centrally between the said adjoining edges and formed of central grooves (14) with two opposite sides oriented in the longitudinal axis (A) of each panel, the said cavity having a surface section roughly equal to twice the surface of a panel groove, each set of tenons and mortices including:
- a first parallelepipedic tenon (16) with a length L1 in the direction of the longitudinal axis (A) of the panel, positioned on the side of one of the surfaces (8) of the panel relative to the other longitudinal axis and directed towards the said surface but stopping at a distance D1 from it,
- a first mortice (20) oriented towards the outside, opening onto the same surface of the panel as the first tenon (16), and with opposite sides spaced at a distance of length L2, one of which is defined at least in part by one side (22) of the first tenon, the other opposite side, of depth D2, being defined by a portion (24) of the edge of the panel and joining the surface (8) of the said panel,
- a second parallelepipedic tenon (26) with sides and a length equal to L2 relative to the longitudinal axis (A) of the panel, this second tenon being positioned on the side of the other surface (10) of the panel relative to the said longitudinal axis and directed towards the longitudinal axis of the panel, side (29) of the said second tenon being closest from the longitudinal axis since positioned at a distance D2 from the said other surface (10) of the panel,
- a second mortice (28), with opposite sides spaced at a distance equal to L1
and being open towards the inside and oriented towards the longitudinal axis (A) of the panel, this second mortice having a bottom arranged at a distance D1 from the other surface (10) of the panel and also having one of its opposite sides
defined at least in part by a side (30) of the second tenon (26), this side of the second tenon being adjacent to the side of this second tenon closest to the longitudinal axis,
the said assembly arrangement being characterized in that the opposite sides of the central groove (14) are separated one from the other by a distance equal to L1 corresponding to the length of the first tenon (16) or to the distance of the sides opposite the second mortice (28) in order to allow interlocking of the panels by a single movement in the vertical direction relative to the longitudinal axis (A) of the panels, one of the said sides opposite the central groove being at least in part defined by a side (18) of the first tenon (16).

2. Assembly arrangement according to claim 1 characterized in that the side
of the second tenon (26), opposite the side (29) the closest to the longitudinal axis (A), is tangent to the other surface (10) of the panel.

3. Assembly device according to claim 1 characterized in that the central groove (14) has its opposite sides equal to L2, the second side (22/222) of the first tenon (16/216) having a length equal to L2, the second mortice (28/228) having its opposite sides equal to L2, and the second tenon (16/226) having its side (34/234) opposite to the one defining in part the second mortice which is equal to L1 and its side opposite to the one which is the closest to the longitudinal axis, which is positioned at a distance L2 from the other surface (10/210) of the panel, this said dimension opposite the second tenon determining an angle (38/238) open onto the said other surface (10/210) of the panel, the distance D1 being equal to the sum of the distances L1 and L2, this specific device enabling not only interlocking of the panels in line by a single movement in the vertical direction relative to the longitudinal axis (A) of the panels (1/201, 2/302), but also interlocking of the same panels in transverse directions by a single movement according to which the first tenon (16/216) of the edge of the panel (1/201) fits into the central groove (14/314) of the adjoining edge of the other panel (2/302), whereas the second mortice (28/228) of the panel edge receives the second tenon (26/326) of the adjacent edge of the other panel, before insertion of the key (11/211).

4. Assembly device according to claim 3 characterized in that the distance L1
is equivalent to twice the distance L2, which implies that the section of the cavity (6) is diamond shaped.

5. Assembly device according to claims 1, 2, 3 or 4 characterized in that the
parallelepipedic form of the first (16) and the second tenon (26) is rectangular shaped.

6. Assembly device according to claims 1, 2, 3, 4 or 5 characterized in that the set of tenons (16, 26) and mortices (20, 28) is integrated in the corresponding edge of the panel.

7. Assembly device according to claims 1, 2, 3, 4 or 5 characterized in that the set of tenons (16, 26) and mortices (20, 28) is integrated in a separate element (3, 5) of the panel, the said element being designed to fix onto the corresponding edges of the said panel.
